# EUROPÄISCHE PATENTSCHRIFT

(11) **EP 2 359 980 B1**
(45) Veröffentlichungstag und Bekanntmachung des Hinweises auf die Patenterteilung: **22.10.2014**
(21) Anmeldenummer: 11150075.7
(22) Anmeldetag: 04.01.2011
(51) Int. Cl.: B23K 26/073, B23K 26/04

(54) **Laserstrahlschweißeinrichtung und Verfahren zur Prüfung einer Laserstrahlschweißeinrichtung**
Laser beam welding device and method for testing same
Dispositif de soudage au laser et procédé de contrôle du dispositif

(30) Priorität: 23.02.2010 DE 102010002257
(43) Veröffentlichungstag der Anmeldung: 24.08.2011
(73) Patentinhaber: Robert Bosch GmbH, 70442 Stuttgart (DE)
(72) Erfinder: Birnesser, Andreas Josef, 70499 Weilimdorf (DE); Keller, Thomas, 77815 Bühl (DE)

(56) Entgegenhaltungen:
- WO-A1-2011/085904
- DE-A1- 10 254 847
- DE-A1- 19 914 984
- DE-A1-102004 050 819
- DE-A1-102007 035 715

## Beschreibung

Die Erfindung betrifft eine Laserstrahlschweißeinrichtung nach dem Oberbegriff des Anspruchs 1 und ein Verfahren zur Prüfung einer Laserstrahlschweißeinrichtung nach dem Oberbegriff des Anspruchs 7.

Eine derartige Laserstrahlschweißeinrichtung ist aus der DE 10 2007 035 717 A1 bekannt. Bei der bekannten Laserstrahlschweißeinrichtung wird mittels einer optischen Einrichtung, die ein Axikon, eine Kollimationslinse und eine Fokusierlinse aufweist, in einem Fügebereich zweier Bauteile ein ringförmiger Laserstrahl erzeugt. Zur Erzeugung eines derartigen ringförmigen Laserstrahls ist es wesentlich, dass die einzelnen Bauteile der optischen Einrichtung exakt zueinander ausgerichtet sind, damit der ringförmige Laserstrahl im Fügebereich auch tatsächlich die erforderliche Rundheit bzw. an all seinen Bereichen die selbe Breite aufweist. Nur so ist mit hinreichender Sicherheit gewährleistet, dass die Bauteile in der Fügezone gleichmäßig erwärmt werden, was eine sichere und gute Verbindung der Bauteile ermöglicht und ggf. Verzüge der Bauteile nach dem Erstarren der Fügezone verhindert.

Ferner ist aus der DE 10 2007 035 717 A1 eine Auswerteeinrichtung bekannt, die die von der Fügezone reflektierte Strahlung erfasst und auswertet. Nähere Angaben hierzu sind jedoch aus der genannten Schrift nicht entnehmbar.

Aus der nachveröffentlichten WO 2011/085904 A1 ist eine Vorrichtung zur Erzeugung eines Laserstrahls bekannt, der an der Oberfläche eines zu bearbeitenden Werkstücks einen punkt- bzw. kreisförmigen Bearbeitungspunkt erzeugt. Darüber hinaus ist eine Detektionseinrichtung vorgesehen, die die von der Oberfläche um den effektiven Bearbeitungspunkt des Laserstrahls herum zurückreflektierte bzw. gestreute elektromagnetische Strahlung erfasst und zur Regelung des Abstandes eines Bearbeitungskopfes der Laserstrahleinrichtung zur Werkstückoberfläche nutzt.

Aus der DE 10 2004 050 819 A1 ist weiterhin eine Laserstrahleinrichtung zur Erzeugung eines ringförmigen Laserstrahls bekannt, die zum Verbinden bzw. Verschweißen zweier Werkstücke dient. Eine Erfassung der Laserstrahlung in der Fokussierebene ist jedoch nicht vorgesehen.

Aus der DE 199 14 984 A1 ist darüber hinaus eine weitere Laserstrahleinrichtung bekannt, die an einer Werkstückoberfläche einen punktförmigen Laserstrahl erzeugt, wobei eine im Arbeitspunkt an der Werkstückoberfläche reflektierte elektromagnetische Strahlung erfasst und ausgewertet wird, um optische Elemente der Laserstrahleinrichtung zu justieren, damit die Fokuslage optimiert wird.

### Offenbarung der Erfindung

Ausgehend von dem dargestellten Stand der Technik liegt der Erfindung die Aufgabe zugrunde, eine Laserstrahlschweißeinrichtung nach dem Oberbegriff des Anspruchs 1 sowie ein Verfahren zur Prüfung einer Laserstrahlschweißeinrichtung nach dem Oberbegriff des Anspruchs 7 derart weiterzubilden, dass eine Überwachung hinsichtlich der Ausrichtung der optischen Elemente zur Erzeugung des ringförmigen Laserstrahls ermöglicht wird. Diese Aufgabe wird bei einer Laserstrahlschweißeinrichtung mit den Merkmalen des Anspruchs 1 bzw. bei einem Verfahren mit den Merkmalen des Anspruchs 7 gelöst. Der Erfindung liegt dabei die Idee zugrunde, dass die Auswerteeinrichtung dazu dient, die Position der Fokusierlinse zu erfassen, wobei die Auswerteeinrichtung wenigstens einen Detektor, insbesondere eine Fotodiode, aufweist, und wobei mittels des wenigstens einen Detektors die Intensitätsverteilung des ringförmigen Laserstrahls erfasst wird. So hat insbesondere eine Verschiebung der Fokusierlinse quer zur Längsachse des Laserstrahls zur Folge, dass sich die Breite des ringförmigen Laserstrahls über den Umfang betrachtet ungleichförmig einstellt. Insbesondere werden dabei Bereiche mit relativ geringer Breite erzeugt, die zu einer geringen Erwärmung der Bauteile in der Fügezone führt, während andere Bereiche mit relativ großer Breite die Bauteile in der Fügezone mehr als erforderlich erwärmten.

Vorteilhafte Weiterbildungen der erfindungsgemäßen Laserstrahlschweißeinrichtung sowie des Verfahrens zur Prüfung einer Laserstrahlschweißeinrichtung sind in den jeweiligen Unteransprüchen angegeben.

In einer vorteilhaften konstruktiven Ausgestaltung der Erfindung ist es vorgesehen, dass die Auswerteeinrichtung mit einer Positioniereinrichtung zur Positionietung der Fokussierlinse gekoppelt ist. Mittels der Positioniereinrichtung lässt sich insbesondere eine Einstellung der Fokussierlinse ermöglichen, ohne dass hierzu manuelle Eingriffe erforderlich sind.

Vorteilhaft hierbei ist insbesondere, wenn die Positioniereinrichtung zumindest eine Verstelleinrichtung für die Fokussierlinse in Richtung der Längsachse des ringförmigen Laserstrahls bzw. in einer Ebene quer hierzu aufweist. Somit kann die Fokussierlinse (bis auf das Verkippen) vollständig ausgerichtet werden.

Um insbesondere die Laserstrahlschweißeinrichtung während des Prüfbetriebs mit der gleichen Leistung wie während des normalen Schweißbetriebs betreiben zu können, ist es in einer weiteren Ausgestaltung der Erfindung vorgesehen, dass die Auswerteeinrichtung zusätzlich wenigstens ein Spiegelelement und eine zusätzliche Fokusierlinse aufweist, die die von dem ringförmigen Laserstrahl erzeugte Reflektion auf den wenigstens einen Detektor fokussiert.

Besonders vorteilhaft ist es hierbei, wenn die zusätzliche Fokusierlinse und die Fokusierlinse identisch ausgebildet sind. Da die zusätzliche Fokusierlinse und die Fokusierlinse dann identische Eigenschaften aufweisen, kann aus der gewonnenen Intensitätsverteilung ein direkter Rückschluss auf die Position der Fokussierlinse vorgenommen werden.

Eine weitere konstruktive Ausbildung der Erfindung sieht vor, dass der wenigstens eine Detektor in der Fokussierebene des ringförmigen Laserstrahls angeordnet ist und, dass ggf. Mittel zur Reduzierung der Intensität des Laserstrahls beim Prüfbetrieb gegenüber dem normalen Schweißbetrieb vorgesehen sind. Mittels einer derartigen Anordnung werden keine zusätzlichen optischen Elemente im Strahlengang des Laserstrahls benötigt. Gegebenenfalls kann es jedoch, je nach verwendetem Detektor, erforderlich sein, die Intensität des ringförmigen Laserstrahls herabzusetzen, ohne dass hierzu jedoch dessen Intensitätsverteilung geändert werden sollte.

Besonders vorteilhaft bei einem Verfahren zur Prüfung einer Laserstrahlschweißeinrichtung ist, wenn die Auswerteeinrichtung eine Positioniereinrichtung für die Fokusierlinse zumindest mittelbar derart ansteuert, dass eine Übereinstimmung der Ist-Intensitätsverteilung mit einer Soll-Intensitätsverteilung erzielt wird. Ein derartiges Verfahren ermöglicht somit eine selbständige, automatische Positionierung der Fokusierlinse, um einen gleichförmigen, ringförmigen Laserstrahl zu erzielen.

Weitere Vorteile, Merkmale und Einzelheiten der erfindungsgemäßen Laserstrahlschweißeinrichtung bzw. des Verfahrens zur Prüfung einer Laserstrahlschweißeinrichtung ergeben sich aus der nachfolgenden Beschreibung bevorzugter Ausführungsbeispiele sowie anhand der Zeichnungen.

Diese zeigen in:
- Fig. 1: eine vereinfachte Darstellung einer Laserstrahlschweißeinrichtung zum Erzeugen eines ringförmigen Laserstrahls,
- Fig. 2: die Darstellung eines Laserstrahls im Bereich seiner Fokussierebene, bei der eine Fokusierlinse gegenüber der Längsachse des Laserstrahls seitlich verschoben ist,
- Fig. 3: eine erfindungsgemäße Laserstrahlschweißeinrichtung mit einer ersten Anordnung eines Detektors zur Erfassung der Intensitätsverteilung des Laserstrahls im Bereich der Fokusierebene und
- Fig. 4: eine gegenüber der Fig. 3 modifizierte erfindungsgemäße Laserstrahlschweißeinrichtung, bei der der Detektor eine zusätzliche optische Einrichtung aufweist.

Gleiche Bauteile bzw. Bauteile mit gleicher Funktion sind in den Figuren mit denselben Bezugsziffem versehen.

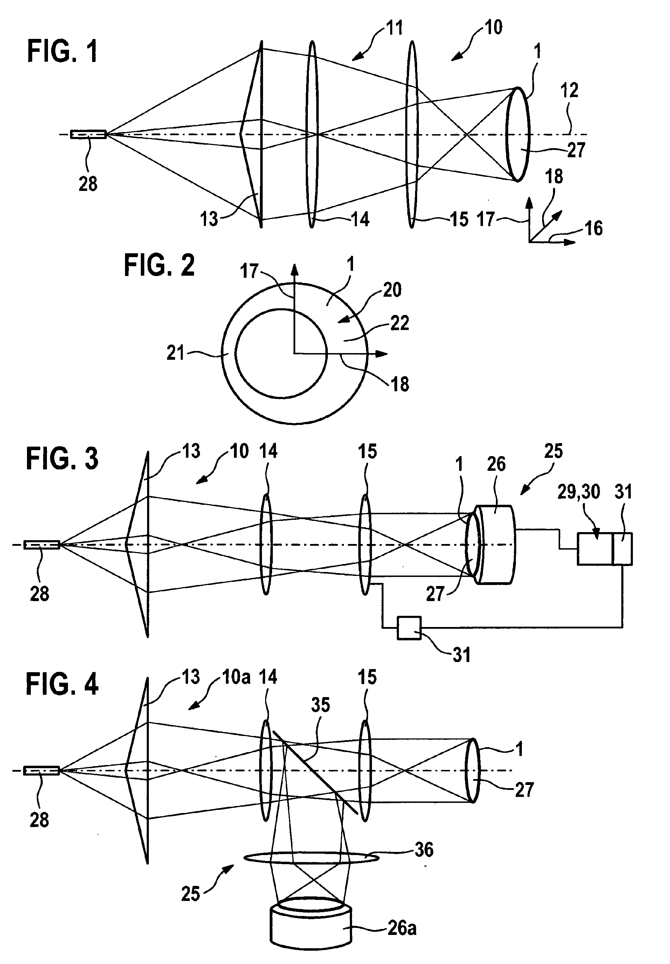

In der Fig. 1 ist der grundsätzliche Aufbau einer Laserstrahlschweißeinrichtung 10 zur Erzeugung eines ringförmigen Laserstrahls 1 dargestellt. Hierbei dient die Laserstrahlschweißeinrichtung 10 bzw. der ringförmige Laserstrahl 1 zum Verbinden zweier, in den Figuren nicht dargestellter Bauteile.

Die Laserstrahlschweißeinrichtung 10 weist eine optische Einrichtung 11 zur Erzeugung des ringförmigen Laserstrahls 1 auf. Die optische Einrichtung 11 umfasst ein in Richtung einer Längsachse 12 verschieblich angeordnetes Axikon 13, welches je nach seiner Position eine Veränderung des Durchmessers des ringförmigen Laserstrahls 1 in seiner Fokusierebene 27 bewirkt. An das Axikon 13 schließt sich eine Kollimationslinse 14 sowie eine Fokusierlinse 15 an. Durch die Kollimationslinse 14 werden Teilstrahlen, die später in einem Punkt der Fügezone der Bauteile, die in der Fokusierebene 27 angeordnet sind, abgebildet werden sollen, parallelisiert. Die anschließende Fokusierung mittels der Fokusierlinse 15 bildet diese parallelen Strahlen ringförmig in Form des ringförmigen Laserstrahls 1 ab. In der Fig. 1 ist ferner ein Koordinatensystem eingezeichnet, in dem mit dem Pfeil 16 die Richtung der Längsachse 12 bezeichnet ist, während durch die Pfeile 17 und 18 die Richtungen senkrecht zur Längsachse 12, das heißt die Richtungen in der Fokusierebene 27 dargestellt sind.

In der Fig. 2 ist die Intensitätsverteilung 20 eines ringförmigen Laserstrahls 1 vereinfacht dargestellt, bei der die Fokusierlinse 15 aus seiner Mitte, das heißt aus ihrer Ausrichtung mit der Längsachse 12, in Richtung des Pfeils 18 ausgelenkt wurde. Man erkennt hierbei, dass insbesondere ein erster Bereich 21 mit relativ geringer Breite sowie ein zweiter Bereich 22 mit relativ großer Breite des ringförmigen Laserstrahls 1 erzeugt wird. Eine derartige Intensitätsverteilung 20 des ringförmigen Laserstrahls 1 ist nachteilig beim Verbinden zweier Bauteile, da diese dann in der Fügezone ungleichmäßig erwärmt bzw. erhitzt werden, was ggf. zu unvollständigen Verbindungen sowie zu einer thermisch nicht erforderlichen Beanspruchung der Bauteile und ggf. zu Bauteilverzügen nach dem Erstarren der Fügezone führt.

Zur Überprüfung der Position der Fokusierlinse 15 wird die Laserstrahleinrichtung 10 mittels einer in der Fig. 3 dargestellten Auswerteeinrichtung 25 ausgestattet. Die Auswerteeinrichtung 25 umfasst hierbei im Wesentlichen einen Detektor 26, der beispielsweise ringförmig angeordnete Sensorelemente in Form von Photodioden oder aber ein Kamerasystem aufweist. Die Anordnung des Detektors 26 in der Fig. 3 ist hierbei in der Ebene des ringförmigen Laserstrahls 1 bzw. in dessen Fokussierebene 27. Um den Detektor 26 dabei während des Prüfbetriebs nicht zu beschädigen, ist es gegebenenfalls erforderlich, die Intensität der Laserstrahlung herabzusetzen. Dies kann beispielsweise mittels einer Reduzierung der Leistung der vorzugsweise gepulsten Laserstrahlquelle 28, oder aber durch Vorsehen zusätzlicher (nicht dargestellter) optischer Elemente erfolgen. Wesentlich hierbei ist lediglich, dass die Intensitätsverteilung 20 durch eine derartige Abschwächung der Leistung der Laserstrahlung nicht beeinflusst wird bzw. die Charakteristik der Intensitätsverteilung 20 erhalten bleibt.

Die von dem Detektor 26 erfasste Intensitätsverteilung 20 wird einer Auswerteeinheit 29 zugeführt. Die Auswerteeinheit 29 dient dazu, aus der erfassten Intensitätsverteilung 20 die Ist-Position der Fokusierlinse 15 zu ermitteln. Insbesondere ist die Auswerteeinheit 29 auch Bestandteil einer Regeleinrichtung 30, die eine Verstelleinrichtung 31 aufweist, welche mit der Fokusierlinse 15 in Wirkverbindung angeordnet ist. Mittels der Positioniereinrichtung 31, die von der Regeleinrichtung 30 ansteuerbar ist, wird die Position der Fokusierlinse 15 insbesondere in Richtung der Pfeile 17 und 18, d.h. senkrecht zur Längsachse 12 bzw. in der Fokusierebene 27 so lange verändert, bis die von dem Detektor 26 erfasste Intensitätsverteilung 20 einer in der Auswerteeinheit 29 abgespeicherten Soll-Intensitätsverteilung entspricht. Ggf. ist mittels der Positioniereinrichtung 31 auch eine Verstellung der Fokusierlinse 15 in Richtung der Längsachse 12 möglich. Somit wird ein geschlossener Regelkreis zur Positionierung der Fokusierlinse 15 geschaffen, welche eine selbständige Positionierung der Fokusierlinse 15 derart ermöglicht, dass der ringförmige Laserstrahl 1 gleichmäßig geformt ist.

In der Fig. 4 ist eine abgewandelte bzw. modifizierte Laserstrahlschweißeinrichtung 10a dargestellt. Die Laserstrahlschweißeinrichtung 10a ist durch eine andere Lage de Detektors 26a gekennzeichnet. Hierzu ist im Strahlengang des Laserstrahls zwischen der Kollimationslinse 14 und der Fokusierlinse 15 ein optisches Element in Form eines als Spiegelelement ausgebildeten Strahlenteilers 35 angeordnet. Der Strahlenteiler 35 weist hierzu bevorzugt eine möglichst hohe Transmission und eine sehr geringe Reflektion für den aus Richtung der Laserstrahlquelle 28 kommenden Laserstrahl auf. Die von dem Strahlenteiler 35 aus Richtung der Fokusierebene 27 zurückreflektierte Strahlung wird über eine zusätzliche Fokusierlinse 36, die sich außerhalb der Kollimationslinse 14 und der Fokusierlinse 15 befindet, auf den Detektor 26a geleitet. Besonders vorteilhaft ist es hierbei, wenn die zusätzliche Fokusierlinse 36 mit der Fokusierlinse 15 der optischen Einrichtung 11 identisch ausgebildet ist. Dies hat den Vorteil, dass der über die zusätzliche Fokusierlinse 36 auf den Detektor 26a geleitete Strahl bzw. die Strahlung prinzipiell die gleichen Eigenschaften aufweist wie der ringförmige Laserstrahl 1.

Ansonsten gilt in Bezug auf die Laserstrahlschweißeinrichtung 10a das auf die Laserstrahlschweißeinrichtung 10 bereits Erwähnte, d.h. insbesondere, dass die Laserstrahlschweißeinrichtung 10a ebenfalls eine entsprechende Auswerteeinrichtung 25 sowie eine Positioniereinrichtung 31 zur Positionierung der Fokusierlinse 15 aufweist, auch wenn dies in der Fig. 4 nicht näher dargestellt ist.

Die soweit beschriebenen Laserstrahlschweißeinrichtungen 10, 10a können in vielfältiger Art und Weise modifiziert bzw. abgewandelt werden, ohne vom Erfindungsgedanken abzuweichen. Insbesondere ist es auch denkbar, dass die Laserstrahlung nach dem erstmaligen Durchtritt durch die Fokusierlinse 15 mittels einer zusätzlichen optischen Einrichtung zur Erzeugung des Bearbeitungsstrahls radial umgelenkt wird, so dass eine radiale Ringschweißung ermöglicht wird.

## Patentansprüche

1. Laserstrahlschweißeinrichtung (10; 10a) zum Verbinden zweier Bauteile, mit einer optischen Einrichtung (11) zur Erzeugung eines ringförmigen Laserstrahls (1) in einer Fokusierebene (27), wobei die optische Einrichtung (11) zumindest eine Fokusierlinse (15) aufweist
**dadurch gekennzeichnet,**
**dass** die Laserstrahlschweißeinrichtung (10; 10a) eine Auswerteeinrichtung (25) zur Erfassung der Laserstrahlung in der Fokusierebene (27) aufweist, dass die Auswerteeinrichtung (25) als Einrichtung zur Erfassung der Position der Fokusierlinse (15) ausgebildet ist, dass die Auswerteeinrichtung (25) wenigstens einen Detektor (26; 26a), insbesondere eine Photodiode, aufweist, und dass mittels des wenigstens einen Detektors (26; 26a) die Intensitätsverteilung (20) des ringförmigen Laserstrahls (1) erfasst werden kann.

2. Laserstrahlschweißeinrichtung nach Anspruch 1,
**dadurch gekennzeichnet,**
**dass** die Auswerteeinrichtung (25) mit einer Positioniereinrichtung (31) zur Positionierung der Fokusierlinse (15) gekoppelt ist.

3. Laserstrahlschweißeinrichtung nach Anspruch 2,
**dadurch gekennzeichnet,**
**dass** die Positioniereinrichtung (31) eine Verstellung der Fokusierlinse (15) in Richtung der Längsachse (12) des ringförmigen Laserstrahls (1) bzw. in einer Ebene senkrecht hierzu ermöglicht.

4. Laserstrahlschweißeinrichtung nach Anspruch 1,
**dadurch gekennzeichnet,**
**dass** die Auswerteeinrichtung (25) zusätzlich wenigstens ein Spiegelelement (35) und eine zusätzliche Fokusierlinse (36) aufweist, die die von dem ringförmigen Laserstrahl (1) erzeugte Reflexion auf den wenigstens einen Detektor (26a) fokussiert.

5. Laserstrahlschweißeinrichtung nach Anspruch 4,
**dadurch gekennzeichnet,**
**dass** die zusätzliche Fokusierlinse (36) und die Fokusierlinse (15) identisch ausgebildet sind.

6. Laserstrahlschweißeinrichtung nach Anspruch 1,
**dadurch gekennzeichnet,**
**dass** der wenigstens eine Detektor (26) in der Fokusierebene (27) des ringförmigen Laserstrahls (1) angeordnet ist und, dass ggf. Mittel zur Reduzierung der Intensität des Laserstrahls (1) beim Prüfbetrieb gegenüber dem normalen Schweißbetrieb vorgesehen sind.

7. Verfahren zur Prüfung einer Laserstrahlschweißeinrichtung (10; 10a), bei dem mittels einer Laserstrahlquelle (28) und einer zumindest eine Fokusierlinse (15) aufweisenden optischen Einrichtung (11) ein ringförmiger Laserstrahl (1) erzeugt wird und mit einer Auswerteeinrichtung (25) zur Erfassung des ringförmigen Laserstrahls (1),
**dadurch gekennzeichnet,**
**dass** mittels wenigstens eines Detektors (26; 26a) der Auswerteeinrichtung (25) die Intensitätsverteilung (20) des ringförmigen Laserstrahls (1) erfasst wird und, dass aus der Intensitätsverteilung (20) auf die Position der Fokusierlinse (15) geschlossen wird.

8. Verfahren nach Anspruch 7,
**dadurch gekennzeichnet,**
**dass** die Auswerteeinrichtung (25) eine Positioniereinrichtung (31) für die Fokusierlinse (15) zumindest mittelbar derart ansteuert dass eine Übereinstimmung der Ist-Intensitätsverteilung (20) mit einer Soll-Intensitätsverteilung (20) erzielt wird.

9. Verfahren nach Anspruch 7 oder 8,
**dadurch gekennzeichnet,**
**dass** der wenigstens eine Detektor (26) im Bereich einer Fokusierebene (27) des ringförmigen Laserstrahls (1) angeordnet wird und, dass die Leistung bzw. die Intensität des ringförmigen Laserstrahls (1) zur Prüfung der Position der Fokusierlinse (15) gegenüber dem normalen Schweißbetrieb herabgesetzt wird.

## Claims

1. Laser beam welding device (10; 10a) for connecting two components, comprising an optical device (11) for generating an annular laser beam (1) in a focal plane (27), wherein the optical device (11) has at least one focusing lens (15),
**characterized**
**in that** the laser beam welding device (10; 10a) has an evaluation device (25) for capturing the laser radiation in the focal plane (27), in that the evaluation device (25) is configured as a device for capturing the position of the focusing lens (15), in that the evaluation device (25) has at least one detector (26; 26a), in particular a photodiode, and in that the at least one detector (26; 26a) can be used to capture the intensity distribution (20) of the annular laser beam (1).

2. Laser beam welding device according to Claim 1,
**characterized**
**in that** the evaluation device (25) is coupled to a positioning device (31) for positioning the focusing lens (15).

3. Laser beam welding device according to Claim 2,
**characterized**
**in that** the positioning device (31) permits displacement of the focusing lens (15) in the direction of the longitudinal axis (12) of the annular laser beam (1) or in a plane perpendicular thereto.

4. Laser beam welding device according to Claim 1,
**characterized**
**in that** the evaluation device (25) additionally has at least one mirror element (35) and an additional focusing lens (36) which focuses the reflection generated by the annular laser beam (1) onto the at least one detector (26a).

5. Laser beam welding device according to Claim 4,
**characterized**
**in that** the additional focusing lens (36) and the focusing lens (15) are of identical configuration.

6. Laser beam welding device according to Claim 1,
**characterized**
**in that** the at least one detector (26) is arranged in the focal plane (27) of the annular laser beam (1), and in that means for reducing the intensity of the laser beam (1) during the inspecting operation with respect to the normal welding operation are provided, if appropriate.

7. Method for inspecting a laser beam welding device (10; 10a), in which an annular laser beam (1) is generated using a laser beam source (28) and an optical device (11) having at least one focusing lens (15), and comprising an evaluation device (25) for capturing the annular laser beam (1),
**characterized**
**in that** at least one detector (26; 26a) of the evaluation device (25) is used to capture the intensity distribution (20) of the annular laser beam (1) and in that the position of the focusing lens (15) is deduced from the intensity distribution (20).

8. Method according to Claim 7,
**characterized**
**in that** the evaluation device (25) at least indirectly drives a positioning device (31) for the focusing lens (15) such that a match between the actual intensity distribution (20) and a predetermined intensity distribution (20) is achieved.

9. Method according to Claim 7 or 8,
**characterized**
**in that** the at least one detector (26) is arranged in the region of a focal plane (27) of the annular laser beam (1), and in that the output or the intensity of the annular laser beam (1) for inspecting the position of the focusing lens (15) is reduced with respect to the normal welding operation.

## Revendications

1. Dispositif de soudage par faisceau laser (10 ; 10a) destiné à lier deux composants, comportant un dispositif optique (11) destiné à générer un faisceau laser annulaire (1) dans un plan de focalisation (27), dans lequel le dispositif optique (11) comprend au moins une lentille de focalisation (15), **caractérisé en ce que**
le dispositif de soudage par faisceau laser (10 ; 10a) comprend un dispositif d'évaluation (25) destiné à détecter le rayonnement laser dans le plan de focalisation (27),
**en ce que** le dispositif d'évaluation (25) est réalisé sous la forme d'un dispositif destiné à détecter la position de la lentille de focalisation (15), **en ce que** le dispositif d'évaluation (25) comprend au moins un détecteur (26 ; 26a), notamment une photodiode, et **en ce qu'**au moyen de l'au moins un détecteur (26 ; 26a), la distribution d'intensité (20) du faisceau laser annulaire (1) peut être détectée.

2. Dispositif de soudage par faisceau laser selon la revendication 1, **caractérisé en ce que**
le dispositif d'évaluation (25) est couplé à un dispositif de positionnement (31) destiné à positionner la lentille de focalisation (15).

3. Dispositif de soudage par faisceau laser selon la revendication 2, **caractérisé en ce que**
le dispositif de positionnement (31) permet de régler la lentille de focalisation (15) dans la direction de l'axe longitudinal (12) du faisceau laser annulaire (1) ou dans un plan perpendiculaire à celui-ci.

4. Dispositif de soudage par faisceau laser selon la revendication 1, **caractérisé en ce que**
le dispositif d'évaluation (25) comprend en outre au moins un élément à miroir (35) et une lentille de focalisation supplémentaire (36) qui focalise la réflexion générée par le faisceau laser annulaire (1) sur l'au moins un détecteur (26a).

5. Dispositif de soudage par faisceau laser selon la revendication 4, **caractérisé en ce que**
la lentille de focalisation supplémentaire (36) et la lentille de focalisation (15) sont réalisées de manière identique.

6. Dispositif de soudage par faisceau laser selon la revendication 1, **caractérisé en ce que**
l'au moins un détecteur (26) est disposé dans le plan de focalisation (27) du faisceau laser annulaire (1), et **en ce qu'**il est prévu si nécessaire des moyens destinés à réduire l'intensité du faisceau laser (1) lors d'un fonctionnement de test par rapport au fonctionnement de soudage normal.

7. Procédé de test d'un dispositif de soudage par faisceau laser (10 ; 10a), dans lequel un faisceau laser annulaire (1) est généré au moyen d'une source de faisceau laser (28) et d'un dispositif optique (11) comprenant au moins une lentille de focalisation (15), et comportant un dispositif d'évaluation (25) destiné à détecter le faisceau laser annulaire (1), **caractérisé en ce que**,
au moyen d'au moins un détecteur (26 ; 26a) du dispositif d'évaluation (25), la distribution d'intensité (20) du faisceau laser annulaire (1) est détectée, et **en ce qu'**on détermine la position de la lentille de focalisation (15) à partir de la distribution d'intensité (20).

8. Procédé selon la revendication 7, **caractérisé en ce que**
le dispositif d'évaluation (25) commande au moins indirectement un dispositif de positionnement (31) destiné à la lentille de focalisation (15) de manière à ce qu'une concordance entre la distribution d'intensité effective (20) et une distribution d'intensité nominale (20) soit obtenue.

9. Procédé selon la revendication 7 ou 8, **caractérisé en ce que**
l'au moins un détecteur (26) est disposé dans la région d'un plan de focalisation (27) du faisceau laser annulaire (1), et **en ce que** la puissance ou l'intensité du faisceau laser annulaire (1) est réduite pour tester la lentille de focalisation (15) par rapport au fonctionnement normal.
